# FASCICULE DE BREVET EUROPEEN

(11) **EP 4 436 849 B1**
(45) Date de publication et mention de la délivrance du brevet: **15.10.2025**
(21) Numéro de dépôt: 22813637.0
(22) Date de dépôt: 20.10.2022
(51) Int. Cl.: B60W 30/16, B60W 30/18, B60W 10/04, B60W 10/18

(54) **PROCÉDÉ DE REDÉMARRAGE D'UN VÉHICULE AUTOMOBILE**
VERFAHREN ZUM WIEDERANFAHREN EINES KRAFTFAHRZEUGS
METHOD FOR RESTARTING A MOTOR VEHICLE

(30) Priorité: 23.11.2021 FR 2112408
(43) Date de publication de la demande: 02.10.2024
(73) Titulaire: Stellantis Auto SAS, 78300 Poissy (FR)
(72) Inventeur: VIVET, Luc, 75016 PARIS 16 (FR); KOUBACHI, Mouad, BENI MELLAL, 23000 (MA)
(74) Mandataire: ESIP
(86) Numéro de dépôt international: PCT/FR2022/051980
(87) Numéro de publication internationale: WO 2023/094740

(56) Documents cités:
- US-A1- 2011 257 862
- US-A1- 2018 038 952
- US-A1- 2019 135 282

## Description

Le contexte technique de la présente invention est celui des dispositifs de régulation et de contrôle des véhicules automobiles. Plus particulièrement, l'invention a trait aux dispositifs permettant de contrôler un redémarrage automatique d'un véhicule automobile ayant été immobilisé préalablement. Plus spécifiquement, l'invention a trait à un procédé de redémarrage

Dans l'état de la technique, on connait les régulateurs de vitesse qui permettent d'asservir la chaîne de traction d'un véhicule automobile porteur en fonction de la vitesse d'un véhicule automobile suivi et de la distance le séparant de lui. Dans le cas où le véhicule automobile suivi s'immobilise, du fait par exemple des conditions de circulation, le régulateur de vitesse du véhicule automobile porteur fait s'arrêter ledit véhicule automobile porteur à distance du véhicule automobile suivi et résultant d'une consigne de distance d'arrêt.

Lorsque le véhicule automobile suivi redémarre à nouveau, il est attendu que le véhicule automobile porteur redémarre à nouveau afin de reprendre le mouvement interrompu plus tôt.

Dans une telle situation de redémarrage, on connait des commandes manuelles qui réactivent le régulateur de vitesse, sous l'impulsion d'un utilisateur du véhicule automobile porteur. Dans ce cas, c'est l'utilisateur qui détermine le moment auquel il souhaite réactiver le régulateur de vitesse et relancer son véhicule automobile. L'inconvénient de ces commandes manuelles est qu'elles nécessitent une intervention de l'utilisateur. Le véhicule automobile porteur n'est donc pas pleinement autonome pour décider de son redémarrage. En outre, cette situation peut conduire à des erreurs d'appréciation de la part de l'utilisateur quant à la pertinence de demander un redémarrage du véhicule automobile. C'est notamment le cas lorsque la visibilité est très réduite ou dans des conditions de circulation particulièrement difficiles dans lesquelles le véhicule automobile suivi redémarre pour s'arrêter à nouveau quelques décimètres plus loin, conduisant à un inconfort des passagers du véhicule automobile porteur et à un fonctionnement non économe.

Dans de telles situations de redémarrage, notamment sur des véhicules autonomes, on connait aussi des régulateurs de vitesse qui sont capables de relancer le véhicule automobile porteur lorsque le véhicule automobile suivi redémarre. De tels régulateurs de vitesse déterminent alors un temps de vol entre le véhicule automobile suivi et le véhicule automobile porteur afin de décider du redémarrage. De tels paramètres ne sont pas optimaux lorsque le véhicule automobile porteur est à l'arrêt.

En outre, l'état de la technique est connu des documents US2011/257862A1 et US2018/038952A1.

La présente invention a pour objet de proposer un nouveau procédé de redémarrage d'un véhicule automobile afin de répondre au moins en grande partie aux problèmes précédents et de conduire en outre à d'autres avantages.

Un autre but de l'invention est de mieux évaluer les conditions de redémarrage du véhicule automobile porteur.

Un autre but de l'invention est d'optimiser le confort des passagers du véhicule automobile porteur.

Un autre but de l'invention est de réduire la consommation énergétique du véhicule automobile porteur.

Selon un premier aspect de l'invention, on atteint au moins l'un des objectifs précités avec un procédé de redémarrage d'un véhicule automobile - dit porteur - immobilisé derrière un véhicule automobile - dit suivi, le procédé de redémarrage étant mis en œuvre par une unité de contrôle et comportant les étapes suivantes :
- une étape de détection d'une distance séparant le véhicule automobile porteur du véhicule automobile suivi ;
- une étape de détection d'une vitesse de déplacement du véhicule automobile suivi ;
- une étape de détermination d'une distance de sécurité calculée (D_sec_calc) définie comme : D_sec_calc = D - D_cons_stop + V_suivi x Ta, où D est la distance séparant le véhicule automobile porteur du véhicule automobile suivi, D_cons_stop est une consigne de distance d'arrêt du véhicule automobile porteur, V_suivi est la vitesse de déplacement du véhicule automobile suivi, et Ta est un délai de sécurité ;
- une étape de comparaison de la distance de sécurité calculée avec une distance de sécurité seuil, une chaîne de traction du véhicule automobile porteur étant pilotée pour générer un couple moteur non nul sur des roues motrices du véhicule automobile porteur dans le cas où la distance de sécurité calculée est supérieure à la distance de sécurité seuil.

Dans le contexte de l'invention, la distance séparant le véhicule automobile porteur et le véhicule automobile suivi est prise entre un parechoc avant du véhicule automobile porteur et un parechoc arrière du véhicule automobile suivi. La distance de sécurité calculée est déterminée à partir du parechoc avant du véhicule automobile porteur. La consigne de distance d'arrêt du véhicule automobile porteur est la distance séparant le véhicule automobile porteur du véhicule automobile suivi et à laquelle le véhicule automobile porteur aurait dû se trouver ou se trouve lorsqu'il a été immobilisé par le régulateur de vitesse dudit véhicule automobile porteur. La consigne de distance d'arrêt est prise entre un parechoc avant du véhicule automobile porteur et un parechoc arrière du véhicule automobile suivi.

Dans le contexte de l'invention, on comprend que le véhicule automobile porteur est « immobilisé derrière » le véhicule automobile suivi lorsque ledit véhicule automobile porteur est à l'arrêt et présente une vitesse nulle, des freins du véhicule automobile porteur étant activé de manière à bloquer les roues du véhicule automobile porteur. Eventuellement dans une telle situation, un dispositif de redémarrage automatique du type « stop and go » peut être activé afin d'économiser de l'énergie et de limiter l'émission de polluants.

Le déplacement détecté du véhicule suivi et susceptible de déclencher les étapes ultérieures du procédé de redémarrage conforme au premier aspect de l'invention est préférentiellement du type d'un déplacement longitudinal, c'est-à-dire ayant pour effet de faire varier une distance séparant le véhicule suivi du véhicule porteur. En l'espèce il s'agit préférentiellement d'un déplacement vers l'avant du véhicule suivi.

Comme évoqué précédemment, le contexte de l'invention est celui d'un véhicule automobile porteur dont la chaîne de traction notamment est régulée via un régulateur de vitesse. Un tel véhicule automobile porteur dont le régulateur de vitesse est ainsi activé aura préalablement à la mise en œuvre du procédé de redémarrage immobilisé le véhicule automobile porteur à distance du véhicule automobile suivi. Le procédé de redémarrage conforme au premier aspect de l'invention permet ainsi de faire redémarrer le véhicule automobile porteur lorsque les conditions de sécurité sont vérifiées. Par « redémarrer », on comprend plus particulièrement de générer un couple moteur sur les roues motrices du véhicule automobile porteur VP afin de le mettre en mouvement.

L'étape de détection de la distance séparant le véhicule automobile porteur du véhicule automobile suivi est réalisée à l'aide de tout détecteur permettant de déterminer une distance. A titre d'exemple non limitatif, il peut s'agir d'un capteur déterminant un temps de vol d'une onde réfléchie sur le véhicule suivi, tel que par exemple un laser, ou un système de type LIDAR, acronyme anglais pour « Laser Imaging Detection and Ranging » signifiant système de détection et d'estimation de distance par laser.

L'étape de détection de la vitesse de déplacement du véhicule automobile suivi est mise en œuvre par tout moyen disponible sur le véhicule automobile porteur. A titre d'exemple non limitatif, l'étape de détection de la vitesse de déplacement peut être mise en œuvre par la lecture d'une variable représentative de la vitesse de déplacement du véhicule automobile suivi et disponible sur un réseau de communication dudit véhicule automobile porteur, ou à l'aide d'un capteur de vitesse embarqué sur ledit véhicule automobile porteur, fonctionnant par exemple sur une mesure de temps de vol.

L'étape de détermination d'une distance de sécurité calculée est mise en œuvre par l'unité de contrôle. L'unité de contrôle est par exemple du type d'un microcontrôleur ou d'un processeur. D'une manière générale, l'unité de contrôle comporte des moyens de calcul et des moyens de mémorisation prenant la forme par exemple d'une zone mémoire.

Dans l'étape de détermination de la distance de sécurité calculée, la vitesse de déplacement du véhicule automobile suivi est celle déterminée lors de l'étape précédente.

Le délai de sécurité utilisé dans le calcul de la distance de sécurité calculée permet ainsi de générer un déphasage entre le redémarrage du véhicule suivi et celui du véhicule porteur, ce déphasage dépendant de paramètres fonctionnels intrinsèques au véhicule automobile porteur, comme il sera décrit ultérieurement dans un perfectionnement particulier de l'invention conforme à son premier aspect.

L'invention met ensuite en œuvre une étape de comparaison de la distance de sécurité calculée avec la distance de sécurité seuil pour déterminer si le véhicule automobile porteur doit être redémarré ou non. Si la distance de sécurité calculée est supérieure à la distance de sécurité seuil, alors le véhicule automobile suivi est suffisamment distant du véhicule automobile porteur pour activer le redémarrage du véhicule automobile porteur. Dans le cas contraire, le véhicule automobile porteur est bien entendu maintenu à l'arrêt.

L'invention conformément à son premier aspect permet ainsi d'optimiser les conditions dans lesquelles le véhicule automobile porteur redémarre à la suite du véhicule automobile suivi. En particulier, elle permet d'optimiser la sécurité et le confort des usagers en cas d'un nouveau freinage du véhicule automobile suivi juste après son redémarrage.

Le procédé de redémarrage conforme au premier aspect de l'invention comprend avantageusement au moins un des perfectionnements ci-dessous, les caractéristiques techniques formant ces perfectionnements pouvant être prises seules ou en combinaison :
- la consigne de distance d'arrêt est paramétrée et mémorisée dans une zone mémoire de l'unité de contrôle. De manière avantageuse, plusieurs valeurs de consigne de distance, correspondant à plusieurs profils comportementaux sont enregistrés dans la zone mémoire de l'unité de contrôle, permettant à l'utilisateur de sélectionner l'une des valeurs enregistrées. La valeur correspondant à chaque profil comportemental est différente de la valeur des autres profils comportementaux. Préférentiellement, trois valeurs différentes de la consigne de distance d'arrêt sont enregistrées dans la zone mémoire, correspondant à une distance d'arrêt courte, une distance d'arrêt moyenne et une distance d'arrêt longue ;
- la consigne de distance d'arrêt est comprise entre 1 m et 6 m. Plus particulièrement, dans le cas où plusieurs valeurs de consigne de distance d'arrêt sont prévues, la valeur de la consigne de distance d'arrêt courte est égale à 3 m, la valeur de la consigne de distance d'arrêt moyenne est égale à 4 m, et la valeur de la consigne de distance d'arrêt longue est égale à 5 m ;
- le délai de sécurité est défini par une durée nécessaire pour desserrer des freins du véhicule automobile porteur et pour piloter la chaîne de traction dudit véhicule automobile porteur afin de générer le couple moteur sur les roues motrices. Cette configuration avantageuse permet ainsi de mieux anticiper le redémarrage du véhicule automobile porteur, en fonction des caractéristiques des différents systèmes embarqués et contribuant notamment au freinage, à l'immobilisation du véhicule automobile porteur et de sa chaîne de traction. La durée nécessaire pour desserrer des freins et pour piloter la chaîne de traction du véhicule automobile porteur afin de générer le couple moteur sur les roues motrices peut être déterminée par étalonnage. A titre d'exemple non limitatif, le délai de sécurité est supérieur à 0,5 s. Préférentiellement, le délai de sécurité est égal à 0,7 s. Cette durée constitue une durée optimale pour à la fois ne pas faire redémarrer trop tôt le véhicule automobile porteur derrière le véhicule automobile suivi, mais aussi pour ne pas rallonger ce délai une fois que le véhicule automobile suivi a été détecté comme ayant repris son déplacement ;
- la distance de sécurité seuil est paramétrée et mémorisée dans la zone mémoire de l'unité de contrôle. Par « paramétrée », on comprend que la distance de sécurité seuil est une variable pouvant être prédéfinie dans la zone mémoire de l'unité de contrôle au cours d'une étape de paramétrage. L'étape de paramétrage est réalisée en usine ou elle est réalisable par l'utilisateur du véhicule automobile porteur, via une interface utilisateur ;
- la distance de sécurité seuil est supérieure ou égale à 1 m. Cette valeur représente un compromis pertinent entre réactivité du véhicule automobile porteur et sécurité ;
- le procédé de redémarrage comporte en outre une étape de comparaison de la vitesse du véhicule automobile suivi avec une vitesse de sécurité seuil, la chaîne de traction du véhicule automobile porteur étant pilotée pour générer un couple moteur non nul sur les roues motrices dans le cas où la vitesse du véhicule automobile suivi est supérieure à la vitesse de sécurité seuil. Cette configuration avantageuse permet d'optimiser la réactivité du véhicule automobile porteur et d'optimiser l'expérience utilisateur, en évitant que le véhicule automobile suivi ne prenne trop de distance et de vitesse relativement au véhicule automobile porteur ;
- la vitesse de sécurité seuil est paramétrée et mémorisée dans la zone mémoire de l'unité de contrôle. Par « paramétrée », on comprend que la vitesse de sécurité seuil est une variable pouvant être prédéfinie dans la zone mémoire de l'unité de contrôle au cours d'une étape de paramétrage. L'étape de paramétrage est réalisée en usine ou elle est réalisable par l'utilisateur du véhicule automobile porteur, via une interface utilisateur ;
- la vitesse de sécurité est supérieure ou égale à 1 m/s. Cette valeur représente un compromis pertinent entre réactivité du véhicule automobile porteur et sécurité ;
- le procédé de redémarrage comporte une étape ultérieure d'activation d'un régulateur de vitesse du véhicule automobile porteur.

Selon un deuxième aspect de l'invention, il est proposé une unité de contrôle configurée pour piloter une chaîne de traction en mettant en œuvre le procédé de redémarrage conforme au premier aspect de l'invention ou selon l'un quelconque de ses perfectionnements.

Selon un troisième aspect de l'invention, il est proposé un véhicule automobile comportant une chaîne de traction et une unité de contrôle conforme au deuxième aspect de l'invention.

Dans le contexte de l'invention, le véhicule automobile est du type d'un véhicule autonome ou semi-autonome. Un véhicule autonome est par exemple un véhicule autonome de niveau 4 ou 5 dans lequel le conducteur peut ne rien faire pour assurer le pilotage complet du véhicule automobile durant un certain temps. Un véhicule semi autonome est par exemple un véhicule autonome de niveau 1, 2 ou 3 dans lequel une intervention du conducteur est encore nécessaire pour assurer le pilotage complet du véhicule automobile.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue synoptique du procédé de redémarrage conforme au premier aspect de l'invention ;
[Fig.2] illustre une vue schématique d'un véhicule automobile conforme au troisième aspect de l'invention et mettant en œuvre le procédé de redémarrage conforme au premier aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

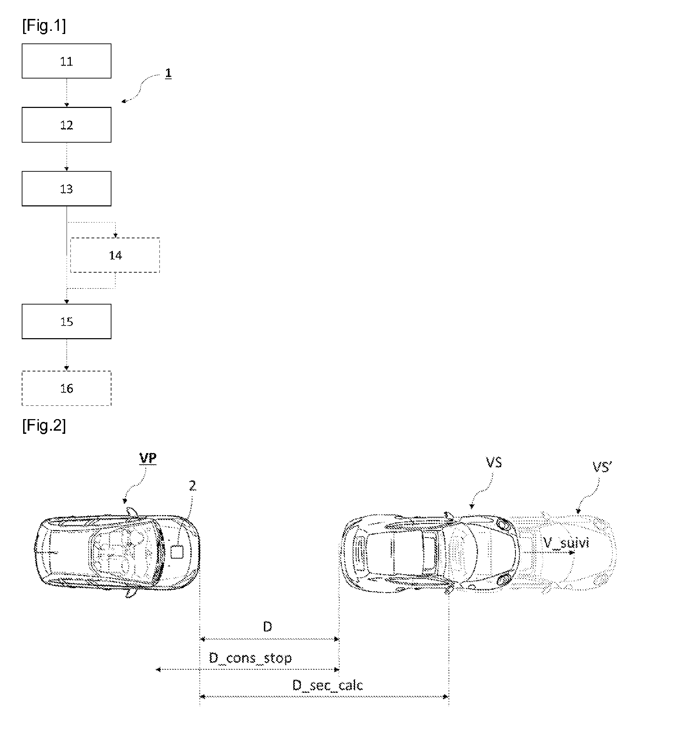

En référence aux FIGURES 1 et 2, l'invention concerne d'abord un procédé de redémarrage 1 d'un véhicule automobile dit porteur VP ayant été préalablement immobilisé derrière un véhicule automobile dit suivi VS.

La FIGURE 1 illustre plus particulièrement un synoptique du procédé de redémarrage 1 et dans lequel les étapes optionnelles sont représentées en traits pointillées. Sur la FIGURE 2, le véhicule automobile suivi VS est représenté en trait fort lorsqu'il est immobilisé, dans la situation ayant conduit à l'arrêt du véhicule automobile porteur VP derrière lui, et le véhicule automobile suivi VS' est représenté en traits fin lorsque, ayant redémarré, il atteint une position dans laquelle les conditions de redémarrage du véhicule automobile porteur VP sont satisfaites, telles que définies précédemment dans le procédé de redémarrage 1 conforme au premier aspect de l'invention et tel que décrit précédemment.

Le procédé de redémarrage 1 conforme au premier aspect de l'invention est plus particulièrement mis en œuvre par une unité de commande 2 du véhicule automobile porteur VP, l'unité de commande étant configurée pour piloter une chaîne de traction dudit véhicule automobile porteur VP.

Le procédé de redémarrage 1 comporte les étapes suivantes :
- une étape de détection 11 d'une distance D séparant le véhicule automobile porteur VP du véhicule automobile suivi VS ;
- une étape de détection 12 d'une vitesse de déplacement V_suivi du véhicule automobile suivi VS ;
- une étape de détermination 13 d'une distance de sécurité calculée D_sec_calc définie comme : D_sec_calc = D - D_cons_stop + V_suivi x Ta ;
- une étape de comparaison 14 de la distance de sécurité calculée D_sec_calc avec une distance de sécurité seuil, une chaîne de traction du véhicule automobile porteur VP étant pilotée pour générer un couple moteur non nul sur des roues motrices du véhicule automobile porteur VP dans le cas où la distance de sécurité calculée V_sec_calc est supérieure à la distance de sécurité seuil.

Dans le contexte de l'invention, la distance D est celle séparant le véhicule automobile porteur VP du véhicule automobile suivi VS, la distance D étant mesurée entre un parechoc avant du véhicule automobile porteur VP et un parechoc arrière du véhicule automobile suivi VS ; D_cons_stop est une consigne de distance d'arrêt du véhicule automobile porteur VP, c'est-à-dire une consigne pour un régulateur de vitesse du véhicule automobile porteur VP utiliser pour déterminer la distance devant séparer le véhicule automobile porteur VP du véhicule automobile suivi VS lorsque le véhicule automobile suivi s'immobilise ; V_suivi est la vitesse de déplacement du véhicule automobile suivi VS lorsque ce dernier redémarre, et Ta est un délai de sécurité propre au véhicule automobile porteur VP.

Selon l'invention, la distance de sécurité calculée est obtenue au travers de la somme d'un premier terme et d'un second terme.

Le premier terme est établi en fonction de la différence entre, d'une part, la distance D réelle séparant le véhicule automobile porteur VP du véhicule automobile suivi VS et, d'autre part, la consigne de distance d'arrêt D_cons_stop du véhicule automobile porteur VP. Ce premier terme permet ainsi de prendre en compte la situation dans laquelle le véhicule automobile porteur aurait raté son arrêt derrière le véhicule automobile suivi lorsque ce dernier s'est immobilisé, c'est-à-dire lorsque le régulateur de vitesse du véhicule automobile porteur VP n'a pas réussi à immobiliser ledit véhicule automobile porteur VP à la distance correspondant à la consigne de distance d'arrêt D_cons_stop.

Le second terme correspond à une distance séparant le véhicule automobile suivi VS du véhicule automobile porteur VP lorsque ledit véhicule automobile suivi VS redémarre, le véhicule automobile porteur VP étant toujours immobilisé. Plus particulièrement, cette distance correspond à la distance que parcourt le véhicule automobile suivi VS se déplaçant à la vitesse de déplacement V_suivi pendant la durée correspondant au délai de sécurité Ta du véhicule automobile porteur VP. C second terme permet ainsi de prendre en compte le déphasage existant sur le véhicule automobile porteur VP pour initier son déplacement vers l'avant.

En particulier, le délai de sécurité Ta est défini par une durée nécessaire pour desserrer des freins du véhicule automobile porteur VP et pour piloter la chaîne de traction dudit véhicule automobile porteur VP afin de générer le couple moteur sur les roues motrices. Cette configuration avantageuse permet ainsi de mieux anticiper le redémarrage du véhicule automobile suivi VS, en fonction des caractéristiques des différents systèmes embarqués et contribuant notamment au freinage, à l'immobilisation du véhicule automobile porteur VP et de sa chaîne de traction. A titre d'exemple non limitatif, le délai de sécurité Ta est supérieur à 0,5 s, et préférentiellement égal à 0,7 s.

Comme évoqué précédemment, la consigne de distance d'arrêt D_cons_stop est comprise entre 3 m et 6 m, et la distance de sécurité seuil est supérieure ou égale à 1 m. Ces valeurs représentent un compromis pertinent entre réactivité du véhicule automobile porteur VP et sécurité des occupants.

Enfin, le procédé de redémarrage 1 comporte une étape ultérieure et optionnelle d'activation 16 d'un régulateur de vitesse du véhicule automobile porteur VP. Cette configuration permet de re-asservir le déplacement du véhicule automobile porteur VP sur le véhicule automobile suivi VS lorsque ledit véhicule automobile porteur VP est à nouveau en déplacement.

De manière particulièrement avantageuse, le procédé de redémarrage 1 comporte en outre une étape optionnelle de comparaison 14 de la vitesse V_suivi du véhicule automobile suivi VS avec une vitesse de sécurité seuil, la chaîne de traction du véhicule automobile porteur VP étant pilotée pour générer un couple moteur non nul sur les roues motrices dans le cas où la vitesse du véhicule automobile suivi VS est supérieure à la vitesse de sécurité seuil. Cette configuration avantageuse permet d'optimiser la réactivité du véhicule automobile porteur VP en évitant que le véhicule automobile suivi VS ne prenne trop de distance et de vitesse relativement au véhicule automobile porteur VP.

Dans le cas où le procédé de redémarrage 1 comporte à la fois une comparaison sur les distances et une comparaison sur les vitesses, alors :
- selon une première alternative, la chaîne de traction du véhicule automobile porteur VP est pilotée pour générer un couple moteur non nul sur les roues motrices dudit véhicule automobile porteur VP si au moins une des deux comparaisons telles que décrites précédemment est vérifiée ;
- selon une deuxième alternative, la chaîne de traction du véhicule automobile porteur VP est pilotée pour générer un couple moteur non nul sur les roues motrices dudit véhicule automobile porteur VP si les deux comparaisons telles que décrites précédemment sont simultanément vérifiées.

Dans le contexte de l'invention, la vitesse de sécurité seuil est supérieure à 1 m/s. Préférentiellement, la vitesse de sécurité seuil est égale à 1 m/s. Cette valeur représente un compromis pertinent entre réactivité du véhicule automobile porteur VP et sécurité.

En synthèse, l'invention concerne un procédé de redémarrage 1 d'un véhicule automobile porteur VP immobilisé derrière un véhicule automobile suivi VS et mettant en mouvement ledit véhicule automobile porteur VP lorsque ledit véhicule automobile suivi VS redémarre à son tour. Pour ce faire, le procédé de redémarrage établit au moins une condition sur la distance séparant le véhicule automobile porteur VP du véhicule automobile suivi VS afin de vérifier si elle est supérieure à une distance de sécurité seuil qui dépend de la vitesse de déplacement du véhicule automobile suivi VS et d'un délai calculé comme un déphasage pour mettre en mouvement le véhicule automobile porteur VP du fait d'un temps de réponse non nul de la chaîne de traction.

## Revendications

1. Procédé de redémarrage (1) d'un véhicule automobile - dit porteur - immobilisé derrière un véhicule automobile - dit suivi, le procédé de redémarrage (1) étant mis en œuvre par une unité de contrôle (2) et comportant les étapes suivantes :
- une étape de détection (11) d'une distance (D) séparant le véhicule automobile porteur (VP) du véhicule automobile suivi (VS) ;
- une étape de détection (12) d'une vitesse de déplacement (V_suivi) du véhicule automobile suivi (VS) ;
et étant **caractérisé par** les étapes supplémentaires suivantes:
- une étape de détermination (13) d'une distance de sécurité calculée (D_sec_calc) définie comme : D_sec_calc = D - D_cons_stop + V_suivi x Ta, où D est la distance séparant le véhicule automobile porteur (VP) du véhicule automobile suivi (VS), D_cons_stop est une consigne de distance d'arrêt du véhicule automobile porteur (VP), V_suivi est la vitesse de déplacement du véhicule automobile suivi (VS), et Ta est un délai de sécurité ;
- une étape de comparaison (15) de la distance de sécurité calculée (D_sec_calc) avec une distance de sécurité seuil, une chaîne de traction du véhicule automobile porteur (VP) étant pilotée pour générer un couple moteur non nul sur des roues motrices du véhicule automobile porteur (VP) dans le cas où la distance de sécurité calculée (D_sec_calc) est supérieure à la distance de sécurité seuil.

2. Procédé de redémarrage (1) selon la revendication précédente, dans lequel la consigne de distance d'arrêt (D_cons_stop) est comprise entre 3 m et 5 m.

3. Procédé de redémarrage (1) selon l'une quelconque des revendications précédentes, dans lequel le délai de sécurité (Ta) est défini par une durée nécessaire pour desserrer des freins du véhicule automobile porteur (VP) et pour piloter la chaîne de traction dudit véhicule automobile porteur (VP) afin de générer le couple moteur sur les roues motrices.

4. Procédé de redémarrage (1) selon la revendication précédente, dans lequel le délai de sécurité (Ta) est supérieur à 0,5 s.

5. Procédé de redémarrage (1) selon l'une quelconque des revendications précédentes, dans lequel la distance de sécurité seuil est supérieure ou égale à 1 m.

6. Procédé de redémarrage (1) selon l'une quelconque des revendications précédentes, dans lequel le procédé de redémarrage (1) comporte en outre une étape de comparaison (14) de la vitesse (V_suivi) du véhicule automobile suivi (VS) avec une vitesse de sécurité seuil, la chaîne de traction du véhicule automobile porteur (VP) étant pilotée pour générer un couple moteur non nul sur les roues motrices dans le cas où la vitesse (V_suivi) du véhicule automobile suivi (VS) est supérieure à la vitesse de sécurité seuil.

7. Procédé de redémarrage (1) selon la revendication précédente, dans lequel la vitesse de sécurité est supérieure ou égale à 1 m/s.

8. Procédé de redémarrage (1) selon l'une quelconque des revendications précédentes, dans lequel le procédé de redémarrage (1) comporte une étape ultérieure d'activation (16) d'un régulateur de vitesse du véhicule automobile porteur (VP).

9. Unité de contrôle (2) configurée pour piloter une chaîne de traction en mettant en œuvre le procédé de redémarrage (1) selon l'une quelconque des revendications précédentes.

10. Véhicule automobile porteur (VP) comportant une chaîne de traction et une unité de contrôle (2) selon la revendication précédente.

## Patentansprüche

1. Verfahren zum Wiederanlassen (1) eines Kraftfahrzeugs - Träger genannt - das hinter einem Kraftfahrzeug - Folgefahrzeug genannt - stehengeblieben ist, wobei das Wiederanlassverfahren (1) durch eine Steuereinheit (2) ausgeführt wird und die folgenden Schritte umfasst:
- einen Schritt zum Erfassen (11) eines Abstands (D), der das Trägerkraftfahrzeug (VP) von dem Folgekraftfahrzeug (VS) trennt;
- einen Schritt zum Erfassen (12) einer Bewegungsgeschwindigkeit (V_Folge) des Folgekraftfahrzeugs (VS);
und ist durch die folgenden zusätzlichen Schritte gekennzeichnet:
- einen Schritt des Bestimmens (13) eines berechneten Sicherheitsabstands (D_sec_cal), der wie folgt definiert ist: D_sec_calc = D - D_cons_stop + V_suivi x Ta, wobei D der Abstand ist, der das Trägerkraftfahrzeug (VP) von dem verfolgten Kraftfahrzeug (VS) trennt, D_cons_stop ein Anhalteweg-Sollwert für das Trägerkraftfahrzeug (VP), V_suivi die Bewegungsgeschwindigkeit des verfolgten Kraftfahrzeugs (VS) und Ta eine Sicherheitsverzögerung ist;
- einen Schritt des Vergleichens (15) des berechneten Sicherheitsabstands (D_sec_calc) mit einem Schwellensicherheitsabstand, wobei ein Antriebsstrang des Trägerkraftfahrzeugs (VP) gesteuert wird, um ein von Null verschiedenes Motordrehmoment an den Antriebsrädern des Trägerkraftfahrzeugs (VP) zu erzeugen, wenn der berechnete Sicherheitsabstand (D_sec_calc) größer ist als der Schwellensicherheitsabstand.

2. Wiederanfahrverfahren (1) nach dem vorhergehenden Anspruch, bei dem der Anhalteweg-Sollwert (D_cons_stop) zwischen 3 m und 5 m beträgt.

3. Neustartverfahren (1) nach einem der vorhergehenden Ansprüche, bei dem die Sicherheitsverzögerung (Ta) durch eine Dauer definiert ist, die zum Lösen der Bremsen des Trägerkraftfahrzeugs (VP) und zum Steuern des Antriebsstrangs des Trägerkraftfahrzeugs (VP) erforderlich ist, um das Motordrehmoment auf die Antriebsräder zu übertragen.

4. Neustartverfahren (1) nach dem vorhergehenden Anspruch, bei dem die Sicherheitsverzögerung (Ta) größer als 0,5 s ist.

5. Neustartverfahren (1) nach einem der vorhergehenden Ansprüche, wobei der Schwellensicherheitsabstand größer oder gleich 1 m ist.

6. Neustartverfahren (1) nach einem der vorhergehenden Ansprüche, wobei das Neustartverfahren (1) ferner einen Schritt des Vergleichens (14) der Geschwindigkeit (V_followed) des verfolgten Kraftfahrzeugs (VS) mit einer Sicherheitsschwellengeschwindigkeit umfasst, wobei der Antriebsstrang des Trägerkraftfahrzeugs (VP) gesteuert wird, um ein von Null verschiedenes Motordrehmoment an den Antriebsrädern zu erzeugen, wenn die Geschwindigkeit (V_followed) des verfolgten Kraftfahrzeugs (VS) größer als die Sicherheitsschwellengeschwindigkeit ist.

7. Wiederanlaufverfahren (1) nach dem vorhergehenden Anspruch, bei dem die Sicherheitsgeschwindigkeit größer oder gleich 1 m/s ist.

8. Neustartverfahren (1) nach einem der vorhergehenden Ansprüche, wobei das Neustartverfahren (1) einen nachfolgenden Schritt des Aktivierens (16) einer Geschwindigkeitsregelung des Trägerkraftfahrzeugs (VP) umfasst.

9. Steuereinheit (2), die dazu konfiguriert ist, einen Antriebsstrang durch Implementierung des Neustartverfahrens (1) gemäß einem der vorhergehenden Ansprüche zu steuern .

10. Trägerkraftfahrzeug (VP) umfassend einen Antriebsstrang und eine Steuereinheit (2) gemäß dem vorhergehenden Anspruch.

## Claims

1. Method for restarting (1) a motor vehicle - called carrier - immobilized behind a motor vehicle - called followed, the restarting method (1) being implemented by a control unit (2) and comprising the following steps:
- a step of detecting (11) a distance (D) separating the carrier motor vehicle (VP) from the followed motor vehicle (VS);
- a step of detecting (12) a speed of movement (V_followed) of the followed motor vehicle (VS);
and being **characterized by** the following additional steps:
- a step of determining (13) a calculated safety distance (D_sec_calc) defined as: D_sec_calc = D - D_cons_stop + V_suivi x Ta, where D is the distance separating the carrier motor vehicle (VP) from the followed motor vehicle (VS), D_cons_stop is a stopping distance setpoint for the carrier motor vehicle (VP), V_suivi is the speed of movement of the followed motor vehicle (VS), and Ta is a safety delay;
- a step of comparing (15) the calculated safety distance (D_sec_calc) with a threshold safety distance, a powertrain of the carrier motor vehicle (VP) being controlled to generate a non-zero engine torque on drive wheels of the carrier motor vehicle (VP) in the case where the calculated safety distance (D_sec_calc) is greater than the threshold safety distance.

2. Restarting method (1) according to the preceding claim, in which the stopping distance setpoint (D_cons_stop) is between 3 m and 5 m.

3. Restarting method (1) according to any one of the preceding claims, in which the safety delay (Ta) is defined by a duration necessary to release the brakes of the carrier motor vehicle (VP) and to control the powertrain of said carrier motor vehicle (VP) in order to generate the engine torque on the drive wheels.

4. Restart method (1) according to the preceding claim, in which the safety delay (Ta) is greater than 0.5 s.

5. method (1) according to any one of the preceding claims, wherein the threshold safety distance is greater than or equal to 1 m.

6. Restarting method (1) according to any one of the preceding claims, in which the restarting method (1) further comprises a step of comparing (14) the speed (V_followed) of the followed motor vehicle (VS) with a threshold safety speed, the powertrain of the carrier motor vehicle (VP) being controlled to generate a non-zero engine torque on the drive wheels in the case where the speed (V_followed) of the followed motor vehicle (VS) is greater than the threshold safety speed.

7. Restarting method (1) according to the preceding claim, in which the safety speed is greater than or equal to 1 m/s*.*

8. Restarting method (1) according to any one of the preceding claims, in which the restarting method (1) comprises a subsequent step of activating (16) a cruise control of the carrier motor vehicle (VP).

9. Control unit (2) configured to control a powertrain by implementing the restart method (1) according to any one of the preceding claims .

10. Carrier motor vehicle (VP) comprising a powertrain and a control unit (2) according to the preceding claim.
